# EUROPEAN PATENT SPECIFICATION

(11) **EP 0 514 329 B1**
(45) Date of publication and mention of the grant of the patent: **20.09.1995**
(21) Application number: 92810331.6
(22) Date of filing: 06.05.1992
(51) Int. Cl.: F16F 1/38, B60G 7/02, B21D 53/10

(54) **Improved rubber-metal bushing and method of producing same**
Verbessertes Gummi-Metall-Lager und Verfahren zu seiner Herstellung
Coussinet en caoutchouc et métal perfectionné et méthode pour sa production

(30) Priority: 16.05.1991 US 700852
(43) Date of publication of application: 19.11.1992
(73) Proprietor: THE PULLMAN COMPANY, Livingston, N.J. 07039 (US)
(72) Inventor: McLaughlin, Ronald J., Maumee, Ohio 43537 (US)
(74) Representative: Lauer, Joachim, Dr.

(56) References cited:
- EP-A- 0 404 420
- DE-B- 1 926 530

## Description

### Background of the Invention

The present invention relates to an improved rubber-metal bushing and, more particularly, to an improved rubber-metal bushing intended for use in automotive suspensions and similar structures according to the preamble of Claim 1. The present invention also relates to a method of producing such a bushing according to the preamble of Claim 12. A bushing and a method of this kind are known for example from DE-B-1 926 530.

A typical rubber-metal bushing used in automobile suspensions to reduce or control vibration, ride, handling and noise comprises a central, inner metal tube which is surrounded by an elastomeric member, which is, in turn, surrounded by an outer metal tube. Both the tubes and the member have a generally cylindrical geometry. The elastomer may be natural rubber or other selected elastomer having a selected durometer.

In use, the outer tube is mounted, as by press-fitting, in one member and a bolt is run through the inner metal tube and through an adjacent structural or suspension member of an automobile frame. A nut is run onto the free end of the bolt and the members are interconnected via the bushing by tensioning the bolt shaft between its head and the nut. The ends of the bushing, particularly the end surfaces of the elastomeric member, may bear against the structural/suspension members and/or the head of the bolt of the nut.

Where increased bearing surface or wearability of the bushing is required, ferrules may be included in the bushing. These ferrules comprise metallic cylindrical bodies with an integral annular flange. The cylindrical body of the ferrule is inserted into the inner metal tube of the bushing, with the flange overlying a selected amount of the end surface of the elastomeric member. The flange provides the increased bearing surface and wearability.

Typically, the outer tube is steel, which provides the highest strength-to-thickness ratio of commonly used manufacturing materials. Preformed tubing of machined tubes could be used, but the most economical method of making the outer tube is to progressively draw the tube from a flat as severed blank. After the closed end of the drawn tube is removed and a flange surrounding the open end is trimmed or removed, the outer tube is typically cleaned, following which it is subjected to zinc-phosphating, wherein it receives a molecular zinc film with phosphate crystals deposited thereon. These coatings increase the mechanical bond strength of the outer tube -- to the elastomer cylinder and to other materials -- and provide a surface which expediently receives adhesives. Zinc phosphating also nominally resists rusting of the outer sleeve during the time the bushing is "on the shelf".

Notwithstanding the expense and effort involved with zinc-phosphating, it is not a significant factor in protecting the outer sleeve from rusting and other corrosion in use as part of an automotive suspension. Other expensive coatings are used to inhibit corrosion of the outer tube, with only limited success, and these coatings can deleteriously affect the dimensional integrity of the bushing.

When the steel outer tube contacts aluminium, a galvanic reaction results in the presence of water. This reaction accelerates corrosion of the outer tube. Making the outer tube of aluminum to avoid this reaction in the presence of commonly used aluminium suspension forgings sacrifices the bushing's strength and economy.

An object of the present invention is the economical formation of reliable rubber-metal bushings which resist corrosion and have adequate mechanical strength.

### Summary of the Invention

With the above and other objects in view, the present invention contemplates an improved rubber-metal bushing as claimed in Claim 1. In general, such a bushing has an outer drawn steel tube surrounding an elastomeric body. The tube and the elastomeric body are generally cylindrical.

In the improved bushing the outer tube is aluminum-coated steel formed by drawing, preferably by progressive drawing, of flat, rolled aluminum-coated steel stock. The progressive drawing is preferably effected so that spalling and flaking of the aluminum coating is avoided. A phosphate and/or chromate layer may be deposited on the aluminum to enhance the mechanical and adhesive bondability of the outer tube. The aluminum inhibits or prevents galvanic corrosion of the steel.

The method hereof includes steps for producing the above-described improved bushing. Such method is defined in Claim 12.

### Brief Description of the Drawing

Figure 1 is an end view of a bushing according to the present invention;
Figure 2 is a sectioned elevation of an embodiment of an improved rubber-metal bushing according to the present invention taken along lines 2-2 in Figure 1; and
Figure 3 is an isometric view of an outer metal tube present in the bushing of Figures 1 and 2.

### Detailed Description

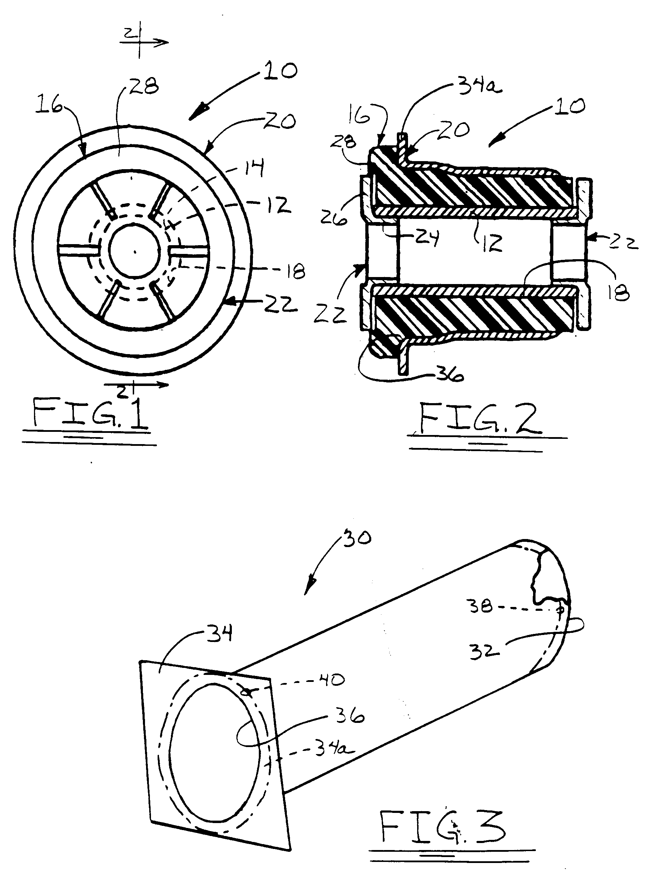

Figures 1 and 2 depict a double-ferruled, rubber-metal bushing 10 of the type marketed by the assignee hereof under the trademark Silentbloc. The bushing 10 is generally similar to those of the prior art, but is improved by the principles of the present invention.

The bushing 10 includes an inner metal, generally cylindrical, tube 12 which may be fabricated from seamless DOM tubing or from flat rolled steel stock having a seam 14.

The bushing 10 also includes an elastomeric member 16 made of natural rubber or other appropriate elastomer having properties, including durometer, which are consistent with the particular application as are known to those skilled in the arts. The member 16 is generally cylindrical and contains a generally cylindrical bore 18 into which the tube 12 is inserted. A metal outer tube 20 fabricated from low carbon steel or similar material may surround and be mechanically and/or adhesively affixed to the exterior of the member 16. The elastomer member 16 may also be bonded in any convenient manner to one or both of the inner and outer tubes 12 and 20.

Press-fit into one or both ends of the tube 12 may be ferrules 22 which may be manufactured from low carbon heat treated steel, high strength low alloy steel or other suitable materials. Each ferrule 22 includes a cylindrical body 24 and an integral flange 26 which overlies a portion of the end surface 28 of the elastomeric member 16 to provide increased bearing surface and wearability.

In the past the outer tube 20 has been made of steel progressively drawn from flat, rolled steel stock. Such tubes 20, while being characterized by high strength and low cost, are subject to corrosion and to accelerated galvanic corrosion where they contacts dissimilar metals such as aluminum. Coatings such as zinc-phosphate which increase the mechanical and adhesive bondability of the tube 20 to other items, such as the elastomer member 16 or an aluminum forging, afford very limited corrosion protection. Other coatings -- paraffine waxes, corrosion-inhibiting oils, zinc-rich epoxy coatings and polymerizing emulsions --enhance corrosion-resistance somewhat, but can adversely affect dimensional integrity of the bushing 10. All of the foregoing coatings and their application are costly, some prohibitively so. Making the outer tube 20 from aluminum avoids galvanic corrosion where the bushing is used with forged aluminum suspension members, but lowers the overall mechanical strength of the bushing 10.

Accordingly, the outer tube 20 is progressively drawn from aluminum-coated, flat, rolled steel stock. Progressive drawing is effected so as to not spall or flake the aluminum coating. Acceptable stock is low carbon draw quality aluminum-coated steel stock having a wall thickness of about .050 inches or less to about .125 inches or more. The aluminum coating may have a thickness resulting from coating about .20 ounces or less to about .40 ounces or more of aluminum per square foot of the steel stock.

The aluminum-coated stock may be progressively drawn on the same equipment and in the same manner as typical uncoated steel stock with no major problems. Progressive drawing of flat stock results in a tube blank 30 (Fig. 3) having a closed end 32 and a rectangular flange 34 surrounding the open end 36. The closed end 32 is removed and the flange 34 is trimmed as shown by the dotted lines 38 and 40 to produce the outer tube 20 with a flange 34a.

Tubes 20 produced as aforesaid were phosphated. Pushout tests of phosphated, aluminum-coated steel outer tubes 20 showed that they could withstand about 80% of the pushout loads of zinc-phosphated steel tubes (6740 pounds average versus 8370 pounds average). Pushout tests were also performed with adhesive bonded tubes 20, the adhesive being Chemlock 205/252. Some of the steel tubes were zinc-phosphated. The aluminum-coated tubes 20 were phosphated, while others were chromated. The adhesive-bonded, phosphated aluminum-coated tubes 20 exhibited 114% higher pushout resistance than adhesive-bonded zinc-phosphated steel tubes (12,510 pounds average versus 10,900 pounds average), while the adhesive-bonded chromated, aluminum-coated tubes 20 had 107% higher pushout resistance (11,725 pounds average versus 10,900 pounds average).

The resistance afforded by the aluminum coating to both normal corrosion and to galvanic corrosion was dramatic. After 168 hours of exposure to a salt water spray (no scribing of the tube 20) no red rust was visible on aluminum-coated steel outer tubes 20, even at the sheared edges where uncoated steel is exposed (probably because aluminum is sacrifical with respect to corrosion). Red rust became evident only after over 500 hours of exposure to the salt water spray. Aluminum-coated steel tubes were press-fit into an aluminum member and subjected to 400 hours of salt spray. No evidence of galvanic corrosion was observed.

The above tests show that when aluminum-coated tubes 20 are press-fit into aluminum suspension forgings, galvinic corrosion is greatly inhibited. Tests also show benefits when the aluminum-coated tubes 20 are press-fit into steel suspension forgings. The aluminum coating protects the tubes 20 from corrosion and red rust and has been shown to ?? deteriously affect the integrity of the press-fit when compared to steel-to-steel press fits. Thus, the principles of this invention permit the beneficial use of the aluminum-coated tubes 20 press fit into ferrous and non-ferrous forgings. Aluminum-coated tubes 20 remain free of red rust after 168 hours of salt spray exposure when pressed into steel forgins. Accordingly, where the forging is steel (and not a galvanic-corrosion-resulting non-ferrous forging) the corrosion and red rust inhibiting qualitites of the aluminum coating are at least as good as in some cases better than (and less expensive than) prior art, non-aluminum-using techniques. Little or no galvanic reaction is detected at the steel-aluminum-steel interfaces. After 168 hours of salt spray exposure phosphated steel tubes pressed into steel forgings are heavily rusted.

What has been disclosed and described in detail are preferred embodiments of the invention. It will be recognized, however, that modifications may be made thereto and other embodiments contemplated without departing from the scope of the invention as set out in the following claims.

## Claims

1. An improved rubber-metal bushing of the type which includes a generally cylindrical elastomeric body surrounded by a drawn steel tube, wherein the improvement comprises:
the tube being drawn from flat, rolled aluminium-coated steel stock.

2. An improved bushing as in Claim 1, wherein drawing of the stock results in a cylinder closed at one end and having a flange surrounding the open end, the closed end and a selected portion of the flange being severed from the cylinder to produce the tube.

3. An improved bushing as in Claim 1, wherein the drawing of the tube is effected progressively.

4. An improved bushing as in Claim 3, wherein the progressive drawing is effected so as to avoid spalling and flaking of the aluminium coating.

5. An improved bushing as in Claim 1, which further comprises:
a crystalline phosphate layer on the aluminium coating.

6. An improved bushing as in Claim 5, wherein the coated tube is capable of forming a mechanical bond which is at least 80% as strong as that of zinc-phosphated steel.

7. An improved bushing as in Claim 5, wherein the coated tube is capable of forming an adhesive bond which is equal to or greater than that of zinc-phosphated steel.

8. An improved bushing as in Claim 1, which further comprises:
a chromate coating on the aluminium coating.

9. An improved bushing as in Claim 8, wherein the coated tube 8 is capable of forming an adhesive bond which is equal to or greater than that of zinc-phosphated steel.

10. An improved bushing as in Claim 1, wherein the aluminium coating is sufficiently thick to inhibit or prevent galvanic corrosion of the steel when the tube is in contact with a non-ferrous metal.

11. An improved bushing as in Claim 1, wherein the aluminum coating is sufficiently thick to inhibit or prevent corrosion and red rust of the steel when the tube is in contact with a ferrous metal.

12. An improved method of producing a rubber-metal bushing, the method being of the type which includes surrounding a generally cylindrical elastomeric body with a drawn steel tube, wherein the improvement comprises the step of:
forming the tube from aluminum-coated steel by drawing flat, rolled aluminum-coated steel stock.

13. An improved method as in Claim 12, wherein the forming step results in a cylinder closed at one end and having a flange surrounding the open end, which comprises the further steps of
severing the closed end, and a selected portion of the flange.

14. An improved method as in Claim 12, wherein the drawing is effected progressively.

15. An improved method as in Claim 14, wherein the progressive drawing is effected so as to avoid spalling and flaking of the aluminium coating.

16. An improved method as in Claim 12, which further comprises:
forming a crystalline phosphate layer on the aluminium coating.

17. An improved method as in Claim 12, which further comprises:
forming a chromate coating on the aluminium coating.

## Patentansprüche

1. Verbesserte Gummi-Metall-Lagerbuchse jener Art, die einen allgemein zylindrischen, elastomeren Körper, umgeben von einem gezogenen Stahlrohr, umfaßt, wobei die Verbesserung darin besteht, daß das Rohr von einem flachen, aluminiumbeschichteten Walzstahlgut gezogen ist.

2. Verbesserte Lagerbuchse nach Anspruch 1, wobei das Ziehen des Stahlguts einen Zylinder ergibt, der an einem Ende geschlossen ist und einen das offene Ende umgebenden Flansch aufweist, wobei das geschlossene Ende und ein ausgewählter Teil des Flansches zur Erzeugung des Rohres vom Zylinder getrennt werden.

3. Verbesserte Lagerbuchse nach Anspruch 1, wobei das Ziehen des Rohres schrittweise ausgeführt wird.

4. Verbesserte Lagerbuchse nach Anspruch 3, wobei das schrittweise Ziehen so ausgeführt wird, daß Anblättern und Abplatzen des Aluminiumüberzugs vermieden werden.

5. Verbesserte Lagerbuchse nach Anspruch 1, die weiterhin eine kristalline Phosphatschicht auf dem Aluminiumüberzug umfaßt.

6. Verbesserte Lagerbuchse nach Anspruch 5, wobei das beschichtete Rohr eine mechanische Verbindung bilden kann, die mindestens zu 80% so stark ist wie die von zinkphosphatiertem Stahl.

7. Verbesserte Lagerbuchse nach Anspruch 5, wobei das beschichtete Rohr eine Klebeverbindung bilden kann, die gleich der von zinkphosphatiertem Stahl oder stärker ist.

8. Verbesserte Lagerbuchse nach Anspruch 1, die weiterhin einen Chromatüberzug auf dem Aluminiumüberzug umfaßt.

9. Verbesserte Lagerbuchse nach Anspruch 8, wobei das beschichtete Rohr 8 eine Klebeverbindung bilden kann, die gleich der von zinkphosphatiertem Stahl oder stärker ist.

10. Verbesserte Lagerbuchse nach Anspruch 1, wobei der Aluminiumüberzug dick genug ist, galvanischer Korrosion des Stahls entgegenzuwirken oder sie zu verhindern, wenn das Rohr mit einem Nichteisenmetall in Berührung steht.

11. Verbesserte Lagerbuchse nach Anspruch 1, wobei der Aluminiumüberzug dick genug ist, rotem Rost des Stahls entgegenzuwirken oder ihn zu verhindern, wenn das Rohr mit einem Eisenmetall in Berührung steht.

12. Verbessertes Verfahren zur Herstellung einer Gummi-Metall-Lagerbuchse, wobei das Verfahren jener Art ist, die Umgeben eines allgemein zylindrischen elastomeren Körpers mit einem gezogenen Stahlrohr beinhaltet, wobei die Verbesserung den Schritt des Formens des Rohrs aus einem aluminiumbeschichteten Stahl durch Ziehen von flachem, aluminiumbeschichtetem Walzstahlgut umfaßt.

13. Verbessertes Verfahren nach Anspruch 12, wobei der Formungsschritt einen Zylinder ergibt, der an einem Ende geschlossen ist und einen das offene Ende umgebenden Flansch aufweist, das den weiteren Schritt des Abtrennens des geschlossenen Endes und eines ausgewählten Teils des Flansches umfaßt.

14. Verbessertes Verfahren nach Anspruch 12, wobei das Ziehen schrittweise ausgeführt wird.

15. Verbessertes Verfahren nach Anspruch 14, wobei das schrittweise Ziehen so ausgeführt wird, daß Abblättern und Abplatzen des Aluminiumüberzugs vermieden werden.

16. Verbessertes Verfahren nach Anspruch 12, das weiterhin das Bilden einer kristallinen Phosphatschicht auf dem Aluminiumüberzug umfaßt.

17. Verbessertes Verfahren nach Anspruch 12, das weiterhin das Bilden eines Chromatüberzugs auf dem Aluminiumüberzug umfaßt.

## Revendications

1. Un coussinet perfectionné en caoutchouc et métal du type comprenant un corps élastomère généralement cylindrique entouré par un tube en acier étiré, dans lequel le perfectionnement comprend :
le tube étant étiré à partir d'une plaque plate en acier laminée et revêtue d'aluminium.

2. Un coussinet perfectionné suivant la revendication 1, dans lequel l'étirage de la plaque a pour résultat un cylindre fermé à une extrémité et ayant une bride entourant l'extrémité ouverte, l'extrémité fermée et une partie sélectionnée de la bride étant découpées du cylindre pour produire le tube.

3. Un coussinet perfectionné suivant la revendication 1, dans lequel l'étirage du tube est effectué progressivement.

4. Un coussinet perfectionné suivant la revendication 3, dans lequel l'étirage progressif est effectué de façon à éviter l'écaillage et l'éclatement du revêtement en aluminium.

5. Un coussinet perfectionné suivant la revendication 1, qui comprend en outre :
une couche de phosphate cristallin sur le revêtement en aluminium.

6. Un coussinet perfectionné suivant la revendication 5, dans lequel le tube revêtu est capable de former une liaison mécanique qui est au moins 80 % aussi solide que celle de l'acier phosphaté au zinc.

7. Un coussinet perfectionné suivant la revendication 5, dans lequel le tube revêtu est capable de former une liaison adhésive qui est égale à ou plus grande que celle de l'acier phosphaté au zinc.

8. Un coussinet perfectionné suivant la revendication 1, qui comprend en outre :
un revêtement en chromate sur le revêtement en aluminium.

9. Un coussinet perfectionné suivant la revendication 8, dans lequel le tube revêtu est capable de former une liaison adhésive qui est égale à ou plus grande que celle de l'acier phosphaté au zinc.

10. Un coussinet perfectionné suivant la revendication 1, dans lequel le revêtement en aluminium est suffisamment épais pour inhiber ou empêcher une corrosion galvanique de l'acier lorsque le tube est en contact avec un métal non ferreux.

11. Un coussinet perfectionné suivant la revendication 1, dans lequel le revêtement en aluminium est suffisamment épais pour inhiber ou empêcher la corrosion et la rouille rouge de l'acier lorsque le tube est en contact avec un métal ferreux.

12. Une méthode perfectionnée de production d'un coussinet en caoutchouc et métal, la méthode étant du type qui comprend l'opération d'entourer un corps élastomère généralement cylindrique par un tube en acier étiré, dans laquelle le perfectionnement comprend l'étape de : formation du tube à partir d'un acier revêtu d'aluminium par l'étirage d'une plaque plate en acier laminée et revêtue d'aluminium.

13. Une méthode perfectionnée suivant la revendication 12, dans laquelle l'étape de formation a pour résultat un cylindre fermé à une extrémité et ayant une bride entourant l'extrémité ouverte, qui comprend en outre les étapes de : découpage de l'extrémité fermée, et d'une partie sélectionnée de la bride.

14. Une méthode perfectionnée suivant la revendication 12, dans laquelle l'étirage est effectué progressivement.

15. Une méthode perfectionnée suivant la revendication 14, dans laquelle l'étirage progressif est effectué de façon à éviter l'écaillage et l'éclatement du revêtement en aluminium.

16. Une méthode perfectionnée suivant la revendication 12, qui comprend en outre : la formation d'une couche de phosphate cristallin sur le revêtement en aluminium.

17. Une méthode perfectionnée suivant la revendication 12, qui comprend en outre :
la formation d'un revêtement en chromate sur le revêtement en aluminium.
